# EUROPEAN PATENT APPLICATION

(11) **EP 4 697 422 A1**
(43) Date of publication of application: **18.02.2026**
(21) Application number: 25742124.8
(22) Date of filing: 09.01.2025
(51) Int. Cl.: H01M 10/04, G01N 21/88

(54) **ELECTRODE TAPE INSPECTION DEVICE AND ELECTRODE TAPE INSPECTION METHOD USING SAME**

(30) Priority: 15.01.2024 KR 20240006371
(71) Applicant: LG Energy Solution, Ltd., Seoul 07335 (KR)
(72) Inventor: KANG, Seung Won, Daejeon 34122 (KR); LEE, Hae Sung, Daejeon 34122 (KR); LEE, Seung Jun, Daejeon 34122 (KR)
(74) Representative: Plasseraud IP
(86) International application number: PCT/KR2025/000494
(87) International publication number: WO 2025/155029

(57) **Abstract**

The electrode tape inspection device of the present invention is an electrode tape inspection device for continuously performing dimensional inspection of an electrode and a tape attached to the electrode and detecting foreign substances present in the electrode and the tape in an electrode taping process, which comprises a photographing unit arranged to photograph the electrode and the tape attached to the electrode, an illumination for dimension measurement arranged to illuminate the tape for measuring dimensions of the tape and the electrode, and an illumination for foreign substance detection arranged to illuminate the tape for detecting foreign substances present in the tape and the electrode.

## Description

### Technical Field

The present invention relates to an electrode tape inspection device and an electrode tape inspection method using the same, and more specifically, relates to an electrode tape inspection device capable of quickly and accurately performing dimensional inspection and foreign substance inspection of electrodes and tapes, and an electrode tape inspection method using the same.

This application claims the benefit of priority based on Korean Patent Application No. 10-2024-0006371 dated January 15, 2024, the disclosure of which is incorporated herein by reference in its entirety.

### Background Art

Recently, rechargeable secondary batteries have been widely used as an energy source for wireless mobile devices. In addition, secondary batteries have also attracted attention as an energy source for electric transportation devices, hybrid electric transportation devices, and the like., which are proposed as a solution to air pollution from existing gasoline transportation devices, diesel transportation devices, and the like, using fossil fuels. Therefore, the types of applications that use secondary batteries are very diverse due to the advantages of secondary batteries, and it is expected that secondary batteries will be applied to more fields and products in the future.

Secondary batteries include, as batteries capable of repeating charging and discharging, lithium-ion batteries, lithium polymer batteries, nickel hydride batteries, and the like. Secondary batteries are used in various fields such as electric vehicles, smartphones, and laptops, and are recognized as the core of energy storage and conversion technologies.

A manufacturing process of secondary batteries can be largely divided into an electrode manufacturing process, an electrode assembly process, and a battery activation process. The electrode manufacturing process is a process of mixing active materials of positive and negative electrodes, a conductive material, and a binder to prepare a slurry, and coating and drying such a slurry on a metal current collector such as a copper sheet or aluminum sheet. The electrode assembly process is a process of laminating or winding the manufactured electrodes and separators to create a basic structure of a battery, and injecting and sealing an electrolyte. The battery activation process is a process of performing repeated charging and discharging, to activate the performance of the battery.

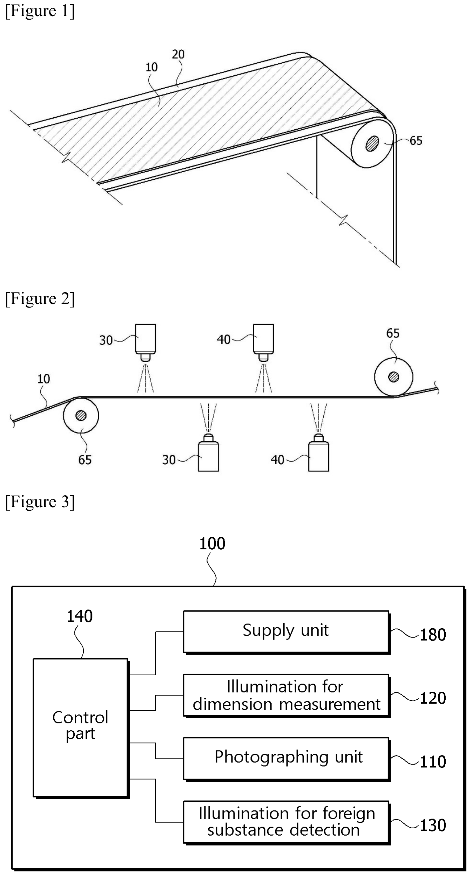

Figure 1 is a schematic diagram schematically showing an appearance of an electrode to which an insulating tape of a conventional art is attached.

Referring to Figure 1, an insulating taping process is required in the manufacturing process of such an electrode. The insulating taping process is a process of attaching an insulating tape (20) to at least a portion of the electrode so that an electrical short circuit does not occur even if external components or materials come into contact while the electrode (10) is conveyed by a roller (65). In the insulating taping process, it is necessary to precisely control the position of the insulating tape (20) on the electrode (10), the tape width, the tape length, the area degree of the electrode covered (overlapped) by the tape, and the like.

For example, if an insulating tape of an appropriate size is not attached to an appropriate position, such as the case that the position where the insulating tape (20) is attached to the electrode (10) is not appropriate, the case that the overlapping width is too narrow or wide, or the case the length of the attached tape is insufficient or excessive, there is a risk that a short circuit may occur with an external metal, or ignition of the electrode may occur due to a short circuit between the electrodes.

Therefore, in the insulation taping process, an inspection device for controlling settings of an insulation tape attachment process by accurately measuring the width of the tape, the position of the tape attached to the electrode, the width of the tape overlapped on the electrode, and the like was needed.

In addition, it was necessary to classify defective electrodes by detecting cases where floating foreign substances, metallic foreign substances, and the like were introduced to the insulation tape and the electrode during the insulation taping process, so that a separate foreign substance inspection device was used.

However, the electrode insulation taping inspection devices of the conventional art have the following problems.

Figure 2 is a schematic diagram schematically showing an appearance of inspecting an electrode (10) to which an insulation tape (20) of a conventional is attached.

First, as in Figure 2, a photographing camera (30) for measuring dimensional elements of the tape (20) attached to the electrode (10) and a photographing camera (40) for inspecting foreign substances present in the electrode (10) and the tape (20) were separately needed. Therefore, by increasing the number of inspection equipment, the complexity degree of the inspection process was increased, the cost for purchasing inspection equipment and the cost for performing inspection were increased, and the inspection time was also increased.

To solve these problems, it is necessary to develop an inspection device and an inspection method that can be applied to the manufacturing process of secondary batteries.

### Disclosure

### Technical Problem

It is an object of the present invention to solve problems occurring in a conventional electrode taping process of a secondary battery.

Through one example of the present invention, it is intended to provide an electrode tape inspection device and an electrode tape inspection method capable of quickly and accurately performing dimensional inspection and foreign substance inspection of electrodes and tapes by comprising a photographing unit, an illumination for dimension measurement, and an illumination for foreign substance detection.

### Technical Solution

To achieve the above-described object, according to one example of the present invention, it provides an electrode tape inspection device for performing dimensional inspection of an electrode and a tape attached to the electrode and detecting foreign substances present in the electrode and the tape in an electrode taping process, wherein the electrode tape inspection device comprises a photographing unit arranged to photograph the electrode and the tape attached to the electrode, an illumination for dimension measurement arranged to illuminate the tape for measuring dimensions of the tape and the electrode, and an illumination for foreign substance detection arranged to illuminate the tape for detecting foreign substances present in the tape and the electrode.

The electrode tape inspection device may continuously perform dimensional inspection and foreign substance detection.

The photographing unit may be arranged to photograph the electrode under transfer and the tape attached to the electrode.

The photographing unit may be a bar-type camera.

The illumination for dimension measurement may illuminate the tape and the electrode so that a regular reflection occurs.

The illumination for dimension measurement may be a diffuse illumination which diffuses light emanating from a light source and then illuminates it.

The illumination for foreign substance detection may illuminate the foreign substances so that a boundary reflection occurs.

The illumination for foreign substance detection may be a collection illumination which illuminates it with light gathered from a light source to one point.

It may further comprise a control part arranged so that an image received from the photographing unit is divided into pixels, which are grouped into odd pixels and even pixels, and each of the grouped odd pixel group and even pixel group is adjusted to have different brightness.

The control part may adjust the odd pixel group of the image to be relatively darker than the even pixel group, and generate an image for tape dimension inspection based on the odd pixels whose brightness has been adjusted.

The control part may be arranged so that the even pixel group of the image is adjusted to be relatively brighter than the odd pixel group, and an image for tape foreign substance detection based on the even pixels whose brightness has been adjusted is generated.

To achieve the above-described object, according to one example of the present invention, it provides an electrode tape inspection method of performing dimensional inspection of a tape, and detecting foreign substances present in the tape using the electrode tape inspection device.

The electrode tape inspection method may be arranged to perform dimensional inspection and foreign substance detection continuously.

Specifically, the electrode tape inspection method comprises an electrode supply step in which a supply unit supplies an electrode, to which a tape is attached, to a measurement position, a dimension measurement illumination step in which the illumination for dimension measurement illuminates the tape, to measure dimensions of the tape and the electrode, a foreign substance detection illumination step in which the illumination for foreign substance detection illuminates the tape, to detect foreign substances present in the tape and the electrode, and a photographing step in which the photographing unit photographs the electrode, to which the tape is attached.

The electrode tape inspection method further comprises a grouping step in which the control part divides an image received from the photographing unit into pixels, which are grouped into odd pixels and even pixels; and a brightness adjusting step in which the control part adjusts each of the grouped odd pixel group and even pixel group to have different brightness.

The control part may adjust the odd pixel group of the image to be relatively darker than the even pixel group in the brightness adjusting step.

The electrode tape inspection method may further comprise an image generation step for dimension inspection of generating an image for tape dimension inspection based on the odd pixel group whose brightness has been adjusted.

The control part may adjust the even pixel group of the image to be relatively brighter than the odd pixel group in the brightness adjusting step.

The electrode tape inspection method may comprise an image generation step for foreign substance detection of generating an image for tape foreign substance detection based on the even pixels whose brightness has been adjusted.

### Advantageous Effects

As discussed above, the electrode tape inspection device related to at least one example of the present invention and the electrode tape inspection method using the same have the following effects.

Through one example of the present invention, by comprising a photographing unit, an illumination for dimension measurement, and an illumination for foreign substance detection, it is possible to quickly and accurately perform the dimensional inspection and foreign substance inspection of electrodes and tapes.

In addition, the electrode tape inspection device of the present invention can perform both dimensional inspection and foreign substance inspection of electrodes and tapes through image data photographed by a single photographing unit, so that it is possible to effectively reduce the cost of the inspection device and the image processing cost.

### Description of Drawings

Figure 1 is a schematic diagram schematically showing an appearance of an electrode to which an insulating tape of a conventional art is attached.
Figure 2 is a schematic diagram schematically showing an appearance of inspecting an electrode to which an insulation tape of a conventional is attached.
Figure 3 is a conceptual diagram conceptually showing components of an electrode tape inspection device according to one example of the present invention.
Figure 4 is a schematic diagram schematically showing an appearance of inspecting an electrode to which an insulating tape is attached using an electrode tape inspection device according to one example of the present invention.
Figure 5 is a partially enlarged view schematically showing an enlarged appearance of a region A of the electrode tape inspection device of Figure 4.
Figure 6 is a perspective diagram schematically showing an appearance of some components of an electrode tape inspection device according to one example of the present invention.
Figure 7 is a conceptual diagram conceptually showing an image processing process of an electrode tape inspection device according to one example of the present invention.
Figure 8 is a photograph showing an image generated for dimensional inspection by an electrode tape inspection device according to one example of the present invention.
Figure 9 is a photograph showing an image generated for foreign substance inspection by an electrode tape inspection device according to one example of the present invention.
Figure 10 is a flowchart showing steps of an electrode tape inspection method according to one example of the present invention.

### Mode for Invention

Hereinafter, an electrode tape inspection device and an electrode tape inspection method according to one example of the present invention will be described in detail with reference to the attached drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

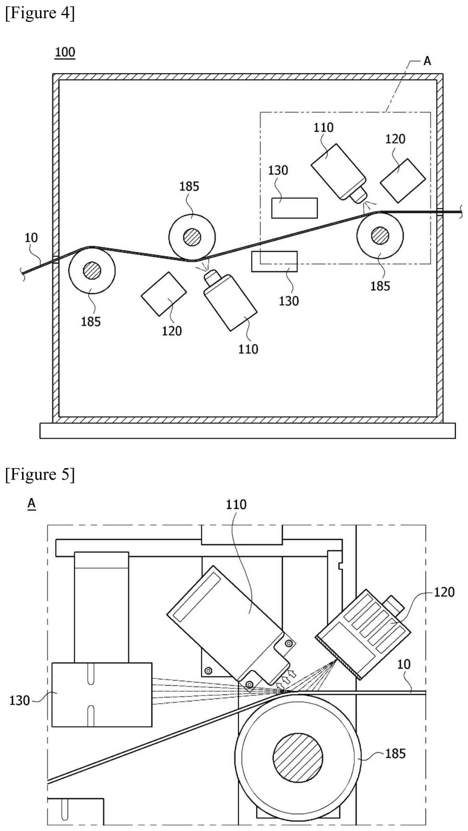

Figure 3 is a conceptual diagram conceptually showing components of an electrode tape inspection device (100) according to one example of the present invention. Figure 4 is a schematic diagram schematically showing an appearance of inspecting an electrode (10) to which an insulating tape (20) is attached using an electrode tape inspection device (100) according to one example of the present invention. Then, Figure 5 is a partially enlarged view schematically showing an enlarged appearance of a region A of the electrode tape inspection device of Figure 4.

Referring to Figures 3 and 5 together with Figure 1 again, the electrode tape inspection device (100) according to one example of the present invention performs dimensional inspection of an electrode (10) supplied by a supply unit (180) and a tape (20) attached to the electrode (10), and detection of foreign substances present in the electrode (10) and the tape (20) in an electrode taping process. The photographing unit (110) may be arranged to photograph the electrode (10) during continuous transfer and the tape (20) attached to the electrode (10) by the supply unit (180). The electrode tape inspection device (100) may comprise a supply unit (180) arranged to transfer the electrode (10) to a photographing position. Such a supply unit (180) may comprise a plurality of transfer rolls (185).

Specifically, the electrode tape inspection device (100) of the present invention comprises a photographing unit (110). The photographing unit (110) is arranged to photograph the tape (20) attached to the electrode (10). The photographing unit (110) may comprise a CIS sensor. Here, the CIS sensor is called a CMOS image sensor, which is a system semiconductor converting light entering the camera lens into a digital signal. Such a CIS sensor provides advantages such as low power, high-speed, high-quality image, and economic efficiency.

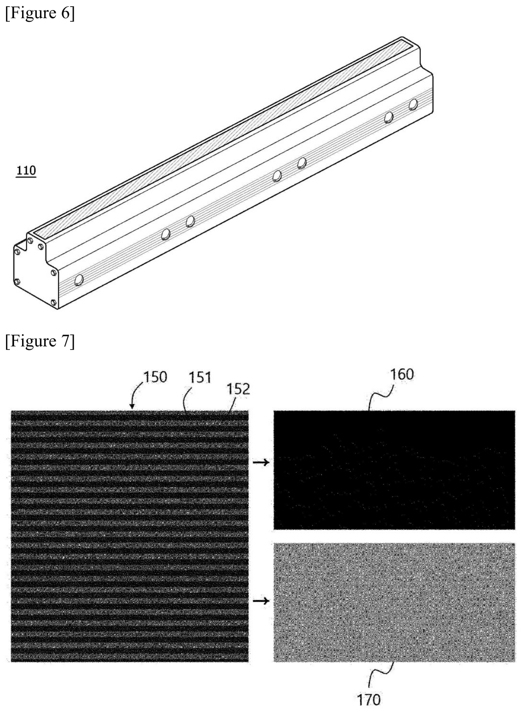

Figure 6 is a perspective view schematically showing an appearance of some components of an electrode tape inspection device (100) according to one example of the present invention.

Referring to Figure 6 together with Figure 4 again, the photographing unit (110) may be a bar-type camera. Such a bar-type camera may be disposed in the width direction of the electrode (10) and then continuously photograph a portion of the width direction of the electrode (10). Such a bar-type camera may continuously generate precise images at high speed, whereby it is suitable for use in inspecting electrodes (10) while continuously moving.

Referring to Figures 3 to 5 again, the electrode tape inspection device (100) of the present invention comprises an illumination (120) for dimension measurement. The illumination (120) for dimension measurement may be arranged to illuminate the tape (20) for measuring the dimensions of the tape (20) and the electrode (10). The illumination (120) for dimension measurement may be positioned adjacent to the photographing unit (110). In addition, the illumination (120) for dimension measurement may illuminate the tape (20) and the electrode (10) so that a regular reflection occurs. For example, the illumination (120) for dimension measurement may be arranged to illuminate the tape (20) and the electrode (10) at an angle where the regular reflection may occur well. For example, the illumination (120) for dimension measurement may be arranged to illuminate the surfaces of the electrode (10) and the tape (20) at an angle of 40 to 70 degrees. The illumination (120) for dimension measurement may be a bar-type illumination extending long in one direction.

Also, the illumination (120) for dimension measurement may be a diffuse illumination which diffuses light emanating from a light source and then illuminates it. Such a diffuse illumination may reduce flashes on the tape (20) and the electrode (10), which are reflected, by dispersing the light. The diffuse illumination may diffuse the light more evenly over the entire measurement target. If the light is dispersed in this way, the regular reflections occur better on the surface of the target. For example, the illumination (120) for dimension measurement may comprise a light source and a diffuser plate for diffusing the light irradiated from the light source.

In addition, the electrode tape inspection device (100) of the present invention comprises an illumination (130) for foreign substance detection. The illumination (130) for foreign substance detection may be arranged to illuminate the tape (20) for detecting foreign substances present in the tape (20) and the electrode (10). The illumination (130) for foreign substance detection may be positioned adjacent to the photographing unit (110). In addition, the illumination (130) for foreign substance detection may illuminate the tape (20) and the electrode (10) so that a boundary reflection occurs. The boundary reflection is a phenomenon in which light is reflected from the surface of the target, which occurs when the angle of the light and the surface angle of the target are similar. For example, the illumination (130) for foreign substance detection may be arranged to illuminate the tape (20) and the electrode (10) at an angle where the boundary reflection may occur better. For example, the illumination (130) for foreign substance detection may be arranged to illuminate the surfaces of the electrode (10) and the tape (20) at an angle of more than 0 degrees to 20 degrees.

Furthermore, the illumination (130) for foreign substance detection may be a collection illumination which illuminates it with light gathered from a light source to one point. The collection illumination may induce the boundary reflection on the surface of the target by concentrating light and intensively illuminating the target. If the boundary reflection is utilized upon detecting foreign substances in this way, the boundary of the target may be detected more accurately. The illumination (130) for foreign substance detection may be a bar-type illumination extending long in one direction. For example, the illumination (130) for foreign substance detection may comprise a light source and a collecting lens passing light irradiated from the light source.

Therefore, the electrode tape inspection device (100) of the present invention can quickly and accurately perform dimensional inspection and foreign substance inspection of the electrode (10) and the tape (20) by comprising a photographing unit (110), an illumination (120) for dimension measurement, and an illumination (130) for foreign substance detection. In addition, the electrode tape inspection device (100) of the present invention can perform both dimensional inspection and foreign substance inspection of the electrode (10) and the tape (20) through image data photographed by a single photographing unit (110), so that it is possible to effectively reduce the cost of the inspection device (100) and the image processing cost.

Figure 7 is a diagram conceptually showing an image processing process of an electrode tape inspection device (100) according to one example of the present invention.

Referring to Figure 7 together with Figures 3 to 5, the present invention may further comprise a control part (140). The control part (140) may be arranged to divide the original image (150) received from the photographing unit (110) into pixels, which are grouped into odd pixels (151) and even pixels (152). Here, the even pixel (152) means a pixel whose Y coordinate is an even number in the original image (150), and the odd pixel (151) means a pixel whose Y coordinate is an odd number in the original image (150). The control part (140) may be arranged so that each of the group of grouped odd pixels (151) and the group of grouped even pixels (152) is adjusted to have different brightness.

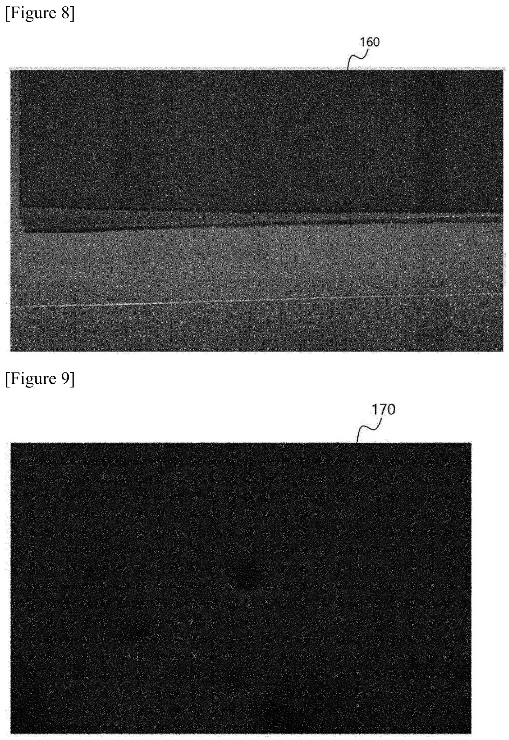

Figure 8 is a photograph showing an image generated for dimensional inspection by an electrode tape inspection device (100) according to one example of the present invention.

Referring to Figure 8 together with Figures 3 to 7 again, the control part (140) may adjust the group of odd pixels (151) of the image to be relatively darker than the group of even pixels (152). The control part (140) may generate an image (160) for dimension inspection of the tape (20) based on the odd pixels (151) whose brightness has been adjusted in this way. In addition, the control part (140) may analyze the image (160) for dimensional inspection generated in this manner to measure, for example, the width size of the tape (20), the position of the tape (20) on the electrode (10), and the like.

Figure 9 is a photograph showing an image generated for foreign substance inspection by an electrode tape inspection device (100) according to one example of the present invention.

Referring to Figure 9 together with Figures 3 to 7 again, the control part (140) may adjust the group of even pixels (152) of the image to be relatively brighter than the group of odd pixels (151). The control part (140) may be arranged to generate an image (170) for foreign substance detection in the tape (20) based on the even pixels (152) whose brightness has been adjusted. In addition, the control part (140) may analyze the image (170) for foreign substance detection generated in this manner to detect, for example, floating foreign substances, metallic foreign substances, and the like, which are attached to the tape (20) and the electrode (10).

Meanwhile, referring to Figure 3 again, the control part (140) may control operation of the photographing unit (110), the illumination (120) for dimension measurement, and the illumination (130) for foreign substance detection. For example, the control part (140) may control the on/off operation of each of the illumination (120) for dimension measurement and the illumination (130) for foreign substance detection, and the brightness of each illumination. For example, the control part (140) may control the photographing speed of the photographing unit (110).

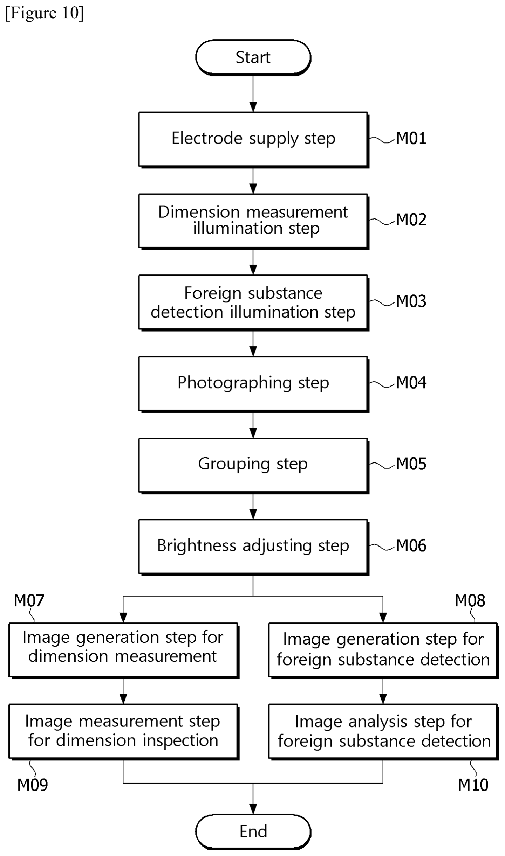

Figure 10 is a flowchart showing steps of an electrode tape inspection method according to one example of the present invention.

Referring to Figure 10 together with Figures 3 to 6 again, the present application provides an electrode tape inspection method according to one example of the present invention. The electrode tape inspection method of the present invention is a method of continuously inspecting dimensions of the tape (20) and detecting foreign substances present in the tape (20) using the electrode tape inspection device (100).

Also, the electrode tape inspection method comprises an electrode supply step (M01). The electrode supply step (M01) is a step in which a supply unit (180) supplies the electrode (10), to which the tape (20) is attached, to a measurement position. At this time, the electrode (10) may be transferred by pressurization of a plurality of transfer rolls in the supply unit (180). Here, the measurement position may be a position where the illumination (120) for dimension measurement, and the foreign substance detection illumination illuminate it with light. In addition, the measurement position may be a position where the photographing unit (110) photographs.

In addition, the electrode tape inspection method comprises a dimension measurement illumination step (M02). The dimension measurement illumination step (M02) is a step in which the illumination (120) for dimension measurement illuminates the tape (20), to measure dimensions of the tape (20) and the electrode (10). At this time, the illumination (120) for dimension measurement may be used as a collection illumination, to induce a boundary reflection to occur on the tape (20) and the electrode (10).

Furthermore, the electrode tape inspection method comprises a foreign substance detection illumination step (M03). The foreign substance detection illumination step (M03) is a step in which the illumination (130) for foreign substance detection illuminates the tape (20), to detect foreign substances present in the tape (20) and the electrode (10). At this time, the illumination (130) for foreign substance detection may be used as a diffuse illumination, to induce a regular reflection to occur on the tape (20) and the electrode (10).

Also, the electrode tape inspection method comprises a photographing step (M04). The photographing step (M04) is a step in which the photographing unit (110) photographs the electrode (10), to which the tape (20) is attached.

In addition, the electrode tape inspection method further comprises a grouping step (M05) in which the control part (140) divides an image received from the photographing unit (110) into pixels, which are grouped into odd pixels (151) and even pixels (152).

Furthermore, the electrode tape inspection method may further comprise a brightness adjusting step (M06). The brightness adjusting step (M06) is a step in which the control part (140) adjusts each of the group of the grouped odd pixels (151) and the group of the grouped even pixels (152) to have different brightness.

Also, the control part (140) may adjust the group of the odd pixels (151) of the image to be relatively darker than the group of the even pixels (152) in the brightness adjusting step (M06).

In addition, the electrode tape inspection method may further comprise an image generation step (M07) for dimension inspection. The image generation step (M07) for dimension inspection may be a step of generating an image (160) for tape (20) dimension inspection based on the group of the odd pixels (151) whose brightness has been adjusted.

Furthermore, the electrode tape inspection method may comprise an image measurement step (M09) for dimension inspection in which the control part (140) analyzes the generated image (160) for dimension inspection to measure the width size of the tape (20), the position of the tape (20) on the electrode (10), and the like.

Also, the control part (140) may adjust the group of even pixels (152) of the image to be relatively brighter than the group of odd pixels (151) in the brightness adjusting step (M06).

In addition, the electrode tape inspection method may further comprise an image (170) generation step (M08) for foreign substance detection. The image (170) generation step (M08) for foreign substance detection may be a step of generating an image (170) for tape (20) foreign substance detection based on the even pixels (152) whose brightness has been adjusted.

Furthermore, the electrode tape inspection method may comprise an image analysis step (M10) for foreign substance detection in which the control part (140) analyzes the generated image (170) for foreign substance detection to detect floating foreign substances, metallic foreign substances, and the like, which are attached to the tape (20) and the electrode (10).

Therefore, the electrode tape inspection method of the present invention can quickly and accurately perform dimensional inspection and foreign substance inspection of the electrode (10) and the tape (20) through these constitution steps, and can perform both dimensional inspection and foreign substance inspection of the electrode (10) and the tape (20) through image data photographed by a single photographing unit (110), so that it is possible to effectively reduce the cost of the inspection device (100) and the image processing cost.

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to the electrode tape inspection device related to at least one example of the present invention and the electrode tape inspection method using the same, it is possible to quickly and accurately perform the dimensional inspection and foreign substance inspection of the electrode and the tape.

## Claims

1. An electrode tape inspection device for performing dimensional inspection of an electrode and a tape attached to the electrode and detecting foreign substances present in the electrode and the tape in an electrode taping process, wherein the electrode tape inspection device is **characterized by** comprising:
a photographing unit arranged to photograph the electrode and the tape attached to the electrode;
an illumination for dimension measurement arranged to illuminate the tape for measuring dimensions of the tape and the electrode; and
an illumination for foreign substance detection arranged to illuminate the tape for detecting foreign substances present in the tape and the electrode.

2. The electrode tape inspection device according to claim 1, **characterized in that**
the illumination for dimension measurement illuminates
the tape and the electrode so that a regular reflection occurs.

3. The electrode tape inspection device according to claim 1, **characterized in that**
the illumination for dimension measurement is
a diffuse illumination which diffuses light emanating from a light source and then illuminates it.

4. The electrode tape inspection device according to claim 1, **characterized in that**
the illumination for foreign substance detection illuminates
the foreign substances so that a boundary reflection occurs.

5. The electrode tape inspection device according to claim 1, **characterized in that**
the illumination for foreign substance detection is
a collection illumination which illuminates it with light gathered from a light source to one point.

6. The electrode tape inspection device according to claim 1, **characterized in that**
the photographing unit is arranged
to photograph the electrode under transfer and the tape attached to the electrode, and the photographing unit is a bar-type camera.

7. The electrode tape inspection device according to claim 1, **characterized by** further comprising
a control part arranged so that an image received from the photographing unit is divided into pixels, which are grouped into odd pixels and even pixels, and each of the grouped odd pixel group and even pixel group is adjusted to have different brightness.

8. The electrode tape inspection device according to claim 7, **characterized in that**
the control part adjusts
the odd pixel group of the image to be relatively darker than the even pixel group, and generates an image for tape dimension inspection based on the odd pixels whose brightness has been adjusted.

9. The electrode tape inspection device according to claim 8, **characterized in that**
the control part is arranged so that
the even pixel group of the image is adjusted to be relatively brighter than the odd pixel group, and an image for tape foreign substance detection based on the even pixels whose brightness has been adjusted is generated.

10. An electrode tape inspection method of performing dimensional inspection of a tape, and detecting foreign substances present in the tape using the electrode tape inspection device according to any one of claims 1 to 9, wherein the electrode tape inspection method is **characterized by** comprising:
an electrode supply step in which a supply unit supplies an electrode, to which a tape is attached, to a measurement position;
a dimension measurement illumination step in which the illumination for dimension measurement illuminates the tape, to measure dimensions of the tape and the electrode;
a foreign substance detection illumination step in which the illumination for foreign substance detection illuminates the tape, to detect foreign substances present in the tape and the electrode; and
a photographing step in which the photographing unit photographs the electrode, to which the tape is attached.

11. The electrode tape inspection method according to claim 10, **characterized by** further comprising:
a grouping step in which the control part divides an image received from the photographing unit into pixels, which are grouped into odd pixels and even pixels; and
a brightness adjusting step in which the control part adjusts each of the grouped odd pixel group and even pixel group to have different brightness.

12. The electrode tape inspection method according to claim 11, **characterized in that**
the control part adjusts the odd pixel group of the image to be relatively darker than the even pixel group in the brightness adjusting step.

13. The electrode tape inspection method according to claim 12, **characterized by** further comprising
an image generation step for dimension inspection of generating an image for tape dimension inspection based on the odd pixel group whose brightness has been adjusted.

14. The electrode tape inspection method according to claim 11, **characterized in that**
the control part adjusts the even pixel group of the image to be relatively brighter than the odd pixel group in the brightness adjusting step.

15. The electrode tape inspection method according to claim 14, **characterized by** comprising
an image generation step for foreign substance detection of generating an image for tape foreign substance detection based on the even pixels whose brightness has been adjusted.
